# EUROPEAN PATENT APPLICATION

(11) **EP 2 515 011 A1**
(43) Date of publication of application: **24.10.2012**
(21) Application number: 09852263.4
(22) Date of filing: 15.12.2009
(51) Int. Cl.: F16J 15/32, F02N 11/00, F02N 15/02

(54) **OIL SEAL STRUCTURE**

(71) Applicant: Toyota Jidosha Kabushiki Kaisha, Toyota-shi, Aichi 471-8571 (JP)
(72) Inventor: MICHIOKA, Hirofumi, Toyota-shi Aichi 471-8571 (JP)
(74) Representative: Intès, Didier Gérard André
(86) International application number: PCT/JP2009/070894
(87) International publication number: WO 2011/074069

(57) **Abstract**

Disclosed is an oil seal structure provided with: a ring gear 40 twat has an inner circumferential surface; an outer plate 20 that has an outer circumferential surface facing the inner circumferential surface of the ring gear 40 and is provided coaxially with the ring gear 40 so as to be able to rotate relative thereto; and an inner sealing member 70 that fits up against the inner circumferential surface of the ring gear 40. The inner sealing member 70 has a lip seal section 72, which can slide against the outer circumferential surface of the outer plate 20 (specifically, an outer race 23), and prevents oil from leaking out through between the inner circumferential surface of the ring gear 40 and the outer circumferential surface of the outer plate 20. An oil retaining part H1 that retains oil is provided near the region S of the outer circumferential surface of the outer plate 20, along which the lip seal section 72 slides.

## Description

### TECHNICAL FIELD

The present invention relates to an oil seal structure including a first member that has an inner circumferential surface, a second member that has an outer circumferential surface facing the inner circumferential surface of the first member and coaxial with and rotational relative to the first member, and a sealing member located between the inner circumferential surface of the first member and the outer circumferential surface of the second member.

### BACKGROUND ART

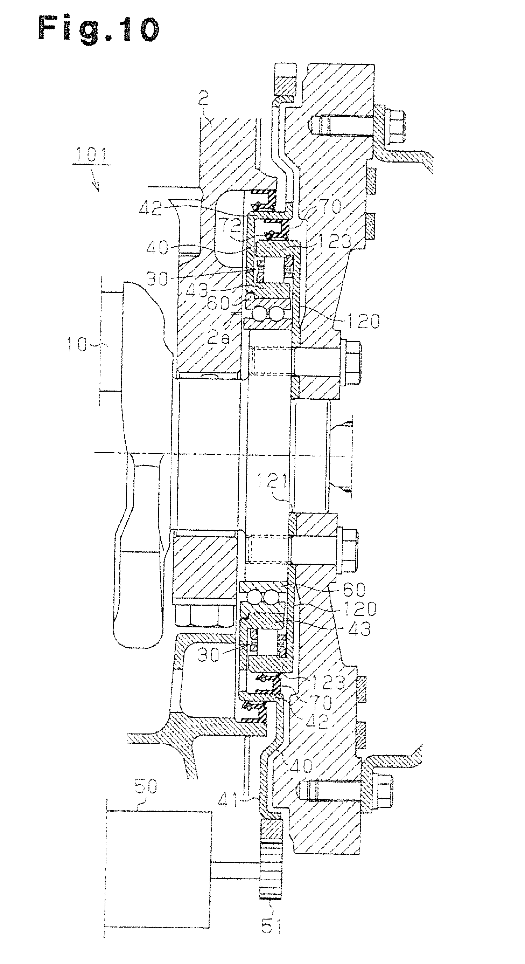

Conventionally, the structure to which this type of oil seal structure is applied includes, for example, a starting torque transmission mechanism for an internal combustion engine disclosed in Patent Document 1. In the starting torque transmission mechanism disclosed in Patent Document 1, a pinion gear 51 mounted on the output shaft of a starting motor 50 and a ring gear 40, which transmits rotational force from the starting motor 50 to a crankshaft 10, are constantly meshed as shown in Fig. 10. Also, a one-way clutch 30 is provided between the ring gear 40 and an outer plate 120 coupled to the crankshaft 10. The one-way clutch 30 permits transmission of the rotational force in the direction from the starting motor 50 to the crankshaft 10, and prevents transmission of the rotational force from the crankshaft 10 to the starting motor 50.

More specifically, the ring gear 40 includes a disk-like main body 41, which has a large opening at the central part, and an angled portion 42, which is a portion that is angled like a step along the entire circumference at a radially middle part of the main body 41. Also, the ring gear 40 has an inner race 43, which faces the inner circumferential surface of the angled portion 42, at the inner circumferential edge of the main body 41.

The outer plate 120 has a disk-like shape, and an opening portion 121 is formed at its central part. A cylindrical outer rate 123 is formed on the outer circumferential portion.

The above-mentioned one-way clutch 30 is provided between the outer circumferential surface of the inner race 43 and the inner circumferential surface of the outer race 123.

Also, a ball bearing 60, which supports the ring gear 40 to rotate relative to the crankshaft 10, is provided the outer circumferential surface of the crankshaft 10 and the inner circumferential surface of the inner race 43 of the ring gear 40.

According to the starting torque transmission mechanism constituted as described above, the starting motor 50 is constantly connected to the crankshaft 10 via the one-way clutch 30. Thus, when restarting an internal combustion engine 101 in an economy running system, the rotational force from the starting motor 50 is immediately transmitted to the crankshaft 10. After starting of the internal combustion engine 101 is completed, the rotational force from the crankshaft 10 is not transmitted to the starting motor 50.

Also, oil for lubricating the ball bearing 60 and the one-way clutch 30 is supplied through, for example, an oil groove 2a in a cylinder block 2. More specifically, the oil from the oil groove 2a is first supplied to a space between an inner ring and an outer ring of the ball bearing 60, and then supplied to the one-way clutch 30 through the gap between the ring gear 40 and the outer plate 20.

Also, a sealing member 70 is provided between the inner circumferential surface of the angled portion 42 of the ring gear 40 and the outer circumferential surface of the outer race 123 of the outer plate 120 as shown in Fig. 10. The sealing member 70 is fitted to the inner circumferential surface of the angled portion 42 of the ring gear 40, and has a lip seal section 72, which is slidable with respect to the outer circumferential surface of the outer race 123. The sealing member 70 prevents leakage of oil from the one-way clutch 30 to the outside of the internal combustion engine 101 through the gap between the ring gear 40 and the outer plate 120.

### PRIOR ART DOCUMENT

### Patent Document

Patent Document 1: Japanese Laid-Open Patent Publication No. 2007-247561

### SUMMARY OF THE INTENTION

### Problems that the Invention is to Solve

According to the above-mentioned oil seal structure applied to the starting torque transmission mechanism for the internal combustion engine 101, since the sealing member 70 is arranged radially outward of the one-way clutch 30, the diameter of the surface along which the lip seal section 72 slides, that is, the outer circumferential surfaces of the outer race 123 is increased. Thus, the circumferential speed of the outer circumferential surface is increased. Therefore, as the frictional heat generated in accordance with sliding of the lip section 72 is increased, thermal degradation of the lip section 72 tends to easily occur. As a result, deterioration of the oil sealing performance of the sealing member 70 cannot be ignored.

Such a its not limited to the above-mentioned oil seal structure as applied to the starting torque transmission mechanism for the internal combustion engine, but is generally common among oil seal structures that include the first member that has the inner circumferential surface, the second member that has the outer circumferential surface facing the inner circumferential surface of the first member and is coaxial with and rotational relative to the first member, and a sealing member that has a lip seal section fitted to the inner circumferential surface of the first member and is slidable with respect to the outer circumferential surface of the second member. The lip seal section prevents the oil from leaking between the inner circumferential surface of the first member and the outer circumferential surface of the second member.

The objective of the present invention is to provide an oil seal structure that appropriately inhibits thermal degradation of a sealing member.

### Means for Solving the Problems

To achieve the foregoing objective, an oil seal structure according to the present invention includes a first member, a second member, a sealing member, and an oil retaining part for retaining oil, The first member includes an inner circumferential surface. The second member includes an outer circumferential surface, which faces the inner circumferential surface of the first member. The second member is coaxial with and rotational relative to the first member. The sealing member is fitted to the inner circumferential surface of the first member and includes a lip seal section, which can slide against the outer circumferential surface of the second member. The sealing member prevents oil from leaking out through between the inner circumferential surface of the first member and the outer circumferential surface of the second member. The part is provided in the vicinity of a region of the outer circumferential surface of the second member along which the lip seal section slides.

With this structure, oil is retained in the vicinity of the region of the outer circumferential surface of the second member, along which the lip seal section slides. Thus, when frictional heat is generated in accordance with sliding of the lip seal section with respect to the outer circumferential surface of the second member, some of the heat is transferred to the oil retained by the oil retaining part at an early stage. Accordingly, as compared to a structure that is not provided with the oil retaining part, the temperature increase at the region of the outer circumferential surface of the second member, along which the lip seal section slides, is reduced, and the temperature increase of the lip seal section is also reduced. Furthermore, since the oil retaining part is not provided at the region of the outer circumferential surface of the second member, along which the lip seal section slides, the oil sealing performance of the sealing member is not reduced due to providing the oil retaining part on the outer circumferential surface of the second member. Therefore, thermal degradation of the sealing member is appropriately inhibited.

The oil retaining part is preferably provided along the entire circumference of the second member.

With this structure, the temperature increase at the region of the outer circumferential surface of the second member, which the lip seal section slides, is reduced along the entire circumference, and the temperature increase of the lip suction is also reduced. Therefore, the thermal degradation of the sealing member is further appropriately inhibited.

Particularly, the oil retaining part is preferably a recess formed in the outer circumferential surface of the second member.

With this structure, the oil that entered the recess formed in the outer circumferential surface of the second member is retained in the recess. Therefore, the oil retaining part is formed in a simple manner.

In this case, the surface of the recess is preferably substantially hemispherical.

In this case, the recess is formed by, for example, machining or laser machining.

Also, the recess preferably extends in a predetermined direction on the outer circumferential surface of the second member.

Particularly, the recess preferably extends helically about a central axis of the second member to approach the lip seal section as the recess is followed in the rotation direction of the second member.

With this structure, the oil the temperature of which has been increased by receiving some of the heat generated in accordance with sliding of the lip seal section with respect to the outer circumferential surface of the second member is transferred in a direction away from the lip seal section through the recess in accordance with rotation of the second member. Accordingly, the oil with increased temperature is inhibited from being retained in the region of the recess close to the lip seal section. That is, the temperature of the oil in the region of the recess close to the lip seal section is maintained to be low. Therefore, the state is maintained in which the frictional heat generated in accordance with sliding of the lip seal section with respect to the outer circumferential surface of the second member is transferred to the oil in the oil retaining part in an appropriate manner. Thus, the temperature increase at the region of the outer circumferential surface of the second member, along which the lip seal section slides, is further reduced, and the temperature increase of the lip seal section is also reduced.

Also, the recess preferably extends along an axial direction of the second member.

With this structure, the oil the temperature of which has been increased by receiving some of the heat generated in accordance with sliding of the lip seal section with respect to the outer circumferential surface of the second member is transferred in a direction away from the lip seal section through the recess. Accordingly, the oil with increased temperature is inhibited from being retained at the region of the recess close to the lip seal section. That is, the temperature of the oil in the region of the recess close to the lip seal section is maintained to be low. Therefore, the state is maintained in which the frictional heat generated in accordance with sliding of the lip seal section with respect to the outer circumferential surface of the second member is transferred to the oil in the oil retaining part in an appropriate manner. Thus, the temperature increase at the region of the outer circumferential surface of the second member, along which the lip seal section slides, is further reduced, and the temperature increase of the lip seal section is also reduced,

The oil retaining part is preferably formed of material having thermal conductivity higher than the region of the second member along which the lip seal section slides.

With this structure, when frictional heat is generated in accordance with sliding of the lip seal section with respect to the second member, some of the heat is transferred to the oil retaining part at an early stage. The heat transferred to the oil retaining part is transferred to the oil retained in the oil retaining part at an early stage. Thus, the temperature increase at the region of the outer circumferential surface of the second member, along which the lip seal section slides, is reduced. Therefore, the thermal degradation of the sealing member is further appropriately inhibited.

If the sealing member further includes a dust seal section, which is located outward of the lip seal section in the axial direction of the sealing member and can slide against the outer circumferential surface of the second member, the oil retaining part is preferably provided on the outer circumferential surface of the second member between the region along which the lip seal section slides and the region along which the dust seal section slides.

With this structure, since the oil retaining part is not provided on the regions of the outer circumferential surface of the second member, along which the lip seal section slides and along which the dust seal section slides, the oil sealing performance and the dust sealing performance of the sealing member are not reduced by providing the oil retaining part on the outer circumferential surface of the second member.

To achieve the foregoing objective, an oil seal structure according the present invention includes a first member, a second member, a sealing member, and a high thermal conductivity section. The first member includes an inner circumferential surface. The second member includes an outer circumferential surface, which faces the inner circumferential surface of the first member. The second member is coaxial with and rotational relative to the first member. The sealing member is fitted to the inner circumferential surface of the first member and includes a lip section, which can slide against the outer circumferential surface of the second member. The sealing member prevents oil from leaking out through between the inner circumferential of the first member and the outer circumferential surface of the second member. The high thermal conductivity section is provided in the vicinity of a region of the outer circumferential surface of the second member along which the lip seal section slides. The high thermal conductivity section is formed of material having thermal conductivity higher than the region.

With this structure, when frictional heat is generated in accordance with sliding of the lip seal section with respect to the outer circumferential surface of the second member, some of the heat is transferred to the high thermal conductivity section at an early stage. Thus, as compared to the structure that is not provided with the high thermal conductivity section, the temperature increase at the region of the outer circumferential surface of the second member, along which the lip seal section slides, is reduced, and the temperature increase of the lip seal section is also reduced. Also, since the high thermal conductivity section is not provided at the region of the outer circumferential surface of the second member, along which the lip seal section slides, the sealing performance of the sealing member is not reduced due to providing the high thermal conductivity section on the outer circumferential surface of the second member. Thus, the thermal degradation of the sealing member is appropriately inhibited.

The oil seal structure is preferably applied to a starting torque transmission mechanism for an internal combustion engine. The first member is preferably adapted such that rotational force from a starting motor for the internal combustion engine is constantly transmitted to the first member. The second member is preferably adapted such that rotational force from a rotary output shaft of the internal combustion engine is constantly transmitted to the second member. The starting torque transmission mechanism preferably includes a one-way clutch provided between the first member and the second member. The one-way clutch permits rotational force of the starting motor in one direction to be transmitted from the first member to the second member, and prevents rotational force from being transmitted from the second member to the first member. The sealing member prevents oil from leaking out from the one-way clutch between the inner circumferential surface of the first member and the outer circumferential surface of the second member.

Particularly, the first member is preferably a substantially disk-like ring gear to which rotational force from the starting motor is constantly transmitted. The ring gear includes an angled portion, which is angled like a step and arranged along the entire circumference at a radially middle part of the ring gear, and an inner race, which is provided radially inward of the angled portion and faces the inner circumferential surface of the angled portion. The second member is preferably a substantially disk-like outer plate coupled to the rotary output shaft of the internal combustion engine. The outer plate includes an outer race, which projects in the axial direction along the entire circumference of the outer circumferential section of the outer plate. The ring gear and the outer plate are arranged such that the outer race is located between the angled portion and the inner race. The one-way clutch is provided between the outer circumferential surface of the inner race and the inner circumferential surface of the outer race. The sealing member is provided between the inner circumferential surface of the angled portion and the outer circumferential surface of the outer race.

According to the oil seal structure applied to the starting torque transmission mechanism for the internal combustion engine having the above-mentioned structure, the sealing member is arranged radially outward of the one-way clutch. Thus, as compared to, for example, the structure in which the sealing member and the one-way clutch are arranged along the axial direction of the rotary output shaft of the internal combustion engine, the outer diameter of the second member, along which the lip seal section slides, that is, the outer race, is increased, and the circumferential speed of the outer race is increased. Since the frictional force generated in accordance with sliding of the lip seal section with respect to the outer circumferential surface of the second member is increased and the associated frictional heat is increased accordingly, the problem becomes significant that the thermal degradation of the lip seal section, or deterioration of the sealing performance of the sealing member can not be ignored.

The thermal degradation of the sealing member is appropriately inhibited by applying the above-mentioned embodiment of the present invention to the oil seal structure applied to the starting torque transmission mechanism for an internal combustion engine having the above structure.

### BRIEF DESCRIPTION OF THE DRAWINGS

Fig. 1 is a cross-sectional view of an oil seal structure according to a first embodiment of the present invention, illustrating mainly a starting torque transmission mechanism for an internal combustion engine to which the oil seal structure is applied;
Fig. 2(A) is a perspective view of the ring gear;
Fig. 2(B) is a front view of the ring gear;
Fig. 2(C) is a side view of the ring gear;
Fig. 3(A) is a side view of the outer plate;
Fig. 3(B) is a front view illustrating the outer plate as viewed from the direction of arrow L in Fig. 3(A);
Fig. 3(C) is a back view of the outer plate as viewed from the direction of arrow R in Fig. 3(A);
Fig. 3(D) is a perspective view illustrating the outer plate as viewed from the direction of arrow L in Fig. 3(A);
Fig. 3(E) is a perspective view illustrating the outer plate as viewed from the direction of arrow R in Fig. 3(A);
Fig. 4 is an enlarged partial cross-sectional view of the starting torque transmission mechanism of Fig. 1, illustrating the inner sealing member and the surrounding structure;
Fig. 5 is an enlarged partial cross-sectional view of an oil seal structure according to a second embodiment of the present invention, illustrating the inner sealing member and the surrounding structure:
Fig. 6 is an enlarged partial cross-sectional view of an oil seal structure according to a third embodiment of the present invention, illustrating the inner sealing member and the surrounding structure,
Fig. 7 is a cross-sectional view illustrating an oil retaining part according to the third embodiment;
Fig. 8 is an enlarged partial cross-sectional view of a modification of the oil seal structure according to the present invention, illustrating the inner sealing member and the surrounding structure;
Fig. 9 is a cross-sectional view illustrating the oil retaining part according to another modification of the oil seal structure of the present invention; and
Fig. 10 is a cross-sectional view illustrating mainly a conventional starting torque transmission mechanism for an internal combustion engine.

### MODES FOUR CARRYING OUST THE INVENTION

### [First Embodiment]

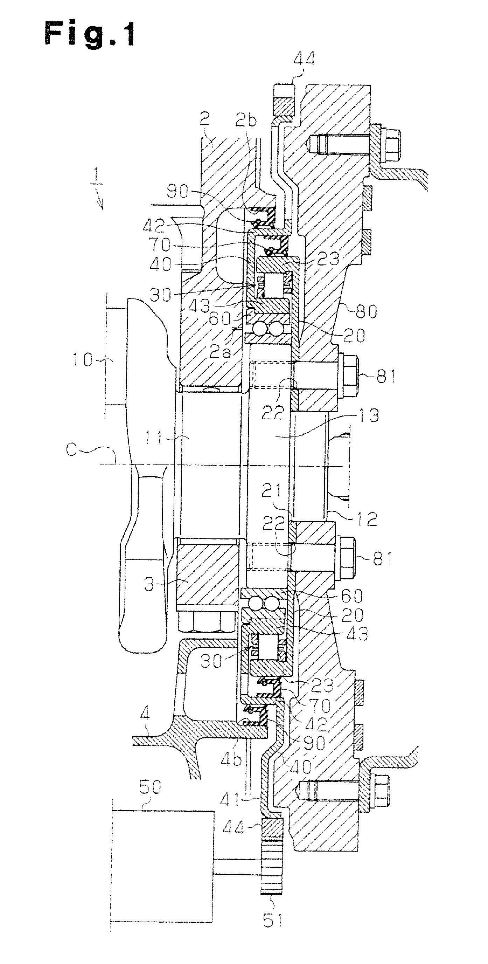

An oil seal structure according to a first embodiment of the present invention will now be described with reference to Figs. 1 to 4. The oil seal structure is applied to a starting torque transmission mechanism for an internal combustion engine.

Fig. 1 shows a cross-sectional view of mainly the starting torque transmission mechanism for the internal combustion engine to which an oil seal structure of the present embodiment is applied. Fig 1 is a cross-sectional view taken along an axis C of a crankshaft 10, which is a rotary output shaft of the internal combustion engine 1. The main body of the internal combustion engine is on the left side, and a transmission is on the right side in Fig. 1.

As shown in Fig. 1, the crankshaft 10 of the internal combustion engine 1 (more specifically, a journal 11) is rotationally supported by a journal bearing portion formed by a cylinder block 2 and a ladder beam 3, The crankshaft 10 is arranged such that one end portion 12 projects from the cylinder block 2. The end portion 12 of the crankshaft 10 has a large diameter portion 13. A ring gear 40 is mounted on the circumferential surface of the large diameter portion 13 via a ball bearing 60 to be coaxial with the crankshaft 10, The inner ring of the ball bearing 60 is fitted to the outer circumferential surface of the large diameter portion 13 of the crankshaft 10 to be secured to the crankshaft 10. Also, an outer plate 20 and a flywheel 80 are secured to the surface of the large diameter portion 13 at the distal end of the crankshaft 10 with bolts 81 such that the outer plate 20 and the flywheel 80 are coaxial with the crankshaft 10. The outer plate 20 and the flywheel 80 rotate integrally with the crankshaft 10 by employing such a structure.

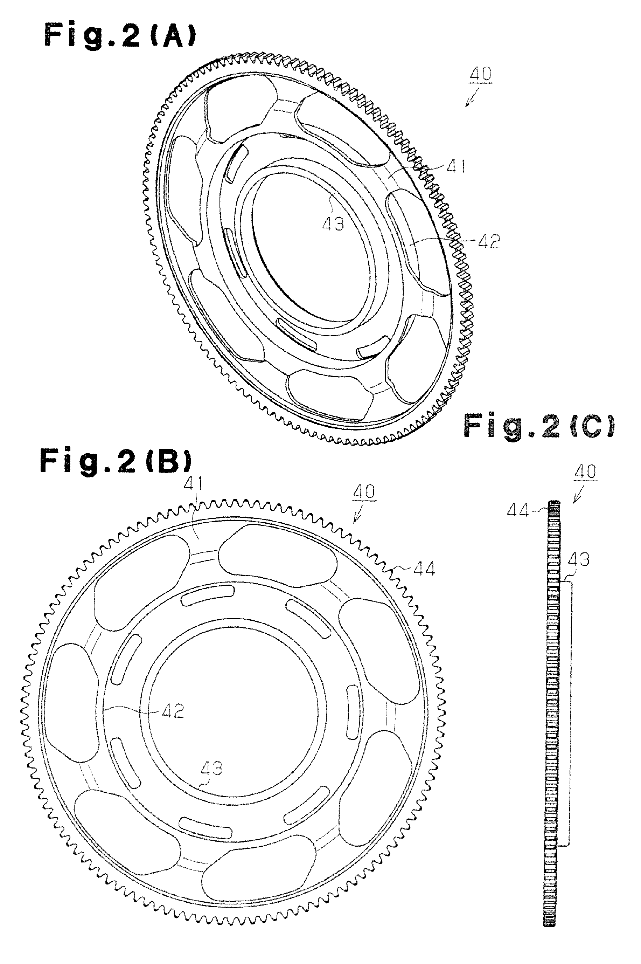

Fig. 2(A) shows a perspective view of the ring gear 40, and Figs. 2(B) and 2(C) show a front view and a side view of the ring gear 40.

As shown in the drawings, the ring gear 40 includes a main body 41, an angled portion 42, an inner race 43, and a gear portion 44. The main body 41 has a disk-like shape in which a great opening is formed at the central part. The angled portion 42 is a portion that is angled like a step formed along the entire circumference at a radially middle part of the main body 41, and is cylindrical, The inner race 43 is formed on the inner circumferential edge of the main body 41 and is cylindrical. Also, the outer circumferential surface of the inner race 43 faces the inner circumferential surface of the angled portion 42. The gear portion 44 is formed on the outer circumferential portion of the main body 41 of the ring gear 40. The gear portion 44 is constantly meshed with a pinion gear 51 mounted on an output shaft of a starting motor 50 (see Fig.1).

As shown in Fig. 1, the inner circumferential surface of the inner race 43 is fitted to the outer circumferential surface of the outer ring of the ball bearing 60 so that the ring gear 40 is secured to the ball bearing 60. In this manner, the ring gear 40 is mounted on the crankshaft 10.

At starting of the internal combustion engine 1, rotational force from the starting motor 50 is transmitted via the pinion gear 51 and the gear portion 44 to rotate the ring gear 40.

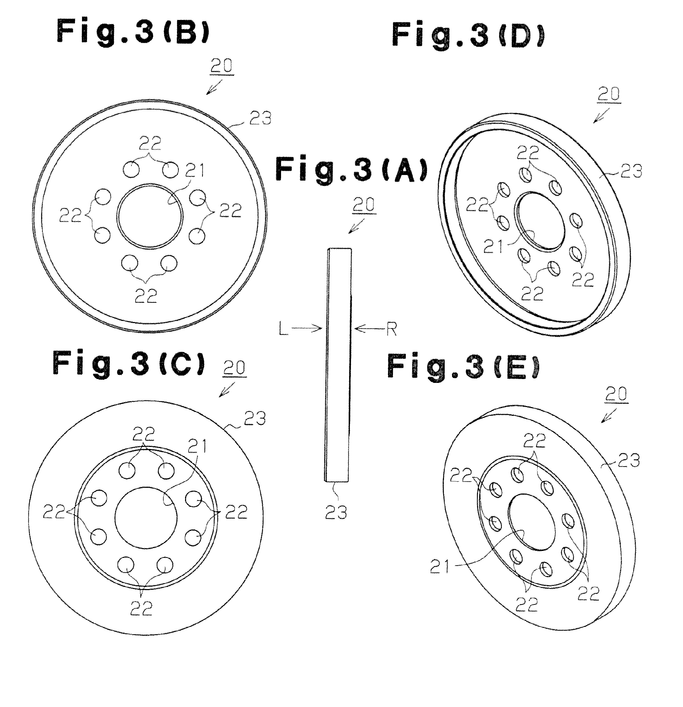

Fig. 3(A) shows a side view of the outer plate 20, Fig. 3(B) shows a front view of the outer plate 20 as viewed from the direction of arrow L in Fig. 3(A), Fig. 3(C) shows a back view of the outer plate 20 as viewed from the direction of arrow R in Fig. 3(A), Fig. 3(D) shows a perspective view of the outer plate 20 as viewed from the direction of arrow L in Fig. 3(A), and Fig. 3(E) shows a perspective view of the outer plate 20 as viewed from the direction of the arrow R in Fig. 3(A).

As shown in the drawings, the outer plate 20 has a disk-like shape in which an opening portion 21 is formed at the central part. A cylindrical outer race 23 is formed at the outer circumferential portion to project in the axial direction of the outer plate 20. Also, the outer plate 20 has bolt through holes 22 (eight in this embodiment), which are arranged to surround the opening portion 21. The bolts 81 are inserted in the bolt through holes 22 (see Fig. 1).

As shown in Fig. 1, the outer plate 20 is mounted on the end surface of the large diameter portion 13 of the crankshaft 10 such that the outer circumferential surface of the inner race 43 of the ring gear 40 and the inner circumferential surface of the outer race 23 face each other, and such that the outer circumferential surface of the outer race 23 and the inner circumferential surface of the angled portion 42 of the ring gear 40 face each other.

A one-way clutch 30 is provided between the outer circumferential surface of the inner race 43 and the inner circumferential surface of the outer race 23. While the one-way clutch 30 permits transmission of rotational force in one direction from the starting motor 50 to the crankshaft 10, the one-way clutch 30 prevents transmission of rotational force from the crankshaft 10 to the starting motor 50. When the one-way clutch 30 is released, the ring gear 40 becomes rotational independently from the rotation of the crankshaft 10 by the function of the ball bearing 60.

According to the starting torque transmission mechanism formed as described above, since the starting motor 50 is constantly connected to the crankshaft 10 via the one-way clutch 30, rotational force from the starting motor 50 is immediately transmitted to the crankshaft 10 at restarting of the internal combustion engine 1 in an economical operating system. When starting of the internal combustion engine 1 is completed, rotational force from the crankshaft 10 is not transmitted to the starting motor 50.

Also, oil for lubricating the ball bearing 60 and the one-way clutch 30 is supplied through, for example, an oil groove 2a in the cylinder block 2. More specifically, the oil from the oil groove 2a is first supplied to a space between the inner ring and the outer ring of the ball bearing 60, and then, supplied to the one-way clutch 30 through the gap between the ring gear 40 and the outer plate 20.

Also, the starting torque transmission mechanism includes an inner sealing member 70 and an outer sealing member 90 to prevent leakage of the lubricant to the outside.

The inner sealing member 70 is an annular sealing member located between the inner circumferential surface of the angled portion 42 of the ring gear 40 and the outer circumferential surface of the outer race 23 of the outer plate 20, and prevents leakage of oil from the one-way clutch 30 to the outside of the internal combustion engine 1 through the gap the ring gear 40 and the outer prate 120.

The cylinder brock 2 and an oil pan 4 respectively have seal fitting portions 2b, 4b, which face the outer circumferential surface of the angled portion 42 of the ring gear 40. The outer sealing member 90 is an annular sealing member located between the inner circumferential surfaces of the seal fitting portions 2b, 4b and the outer circumferential surface of the angled portion 42 of the ring gear 40, and prevents leakage of oil through the gap between the ring gear 40 with respect to the cylinder block 2 and the oil pan 4 to the outside oaf the internal combustion engine, 1.

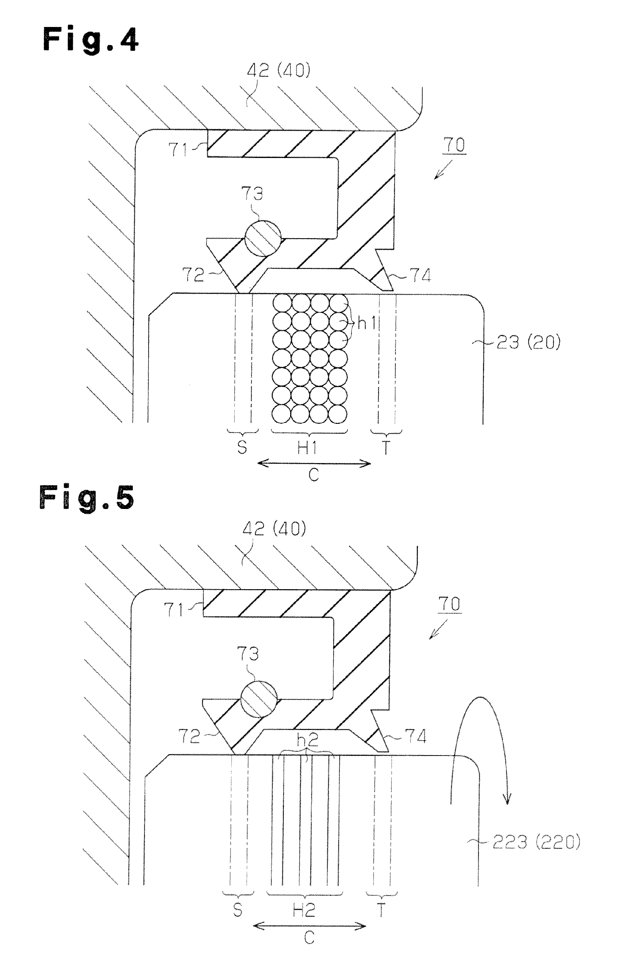

The structure of the inner sealing member 70 and the outer race 23 will now be described with reference to Fig. 4.

Fig. 4 shows an enlarged cross-sectional view of the inner sealing member 70 and the surrounding structure in Fig. 1. Fig 4 shows a cross-sectional view along the axis C of the crankshaft 10, but shows a side view of the outer race 23.

As shown in Fig. 4, the inner sealing member 70 has a substantially U-shaped cross-section, and includes a fitting portion 71, which is fitted to the inner circumferential surface of the angled portion 42 of the ring gear 40, a lip seal section 72, which is slidable with respect to the outer circumferential surface of the outer race 23, and a dust seal section 74, which is located outward of the lip seal section 72 (right side in Fig. 4) in the direction of the axis C and is slidable with respect to the outer circumferential surface of the outer plate 20. The fitting portion 71, the lip seal section 72, and the dust seal section 74 are formed of elastomer. Also, a metal annular member (not shown) is provided in the fitting portion 71, and the member keeps the inner sealing member 70 to be fitted to the inner circumferential surface of the angled portion 42 of the ring gear 40. Also, the inner sealing member 70 includes an annular spring 73, which urges the lip seal section 72 toward the outer circumferential surface of the outer race 23.

The lip seal section 72 prevents leakage of oil through the gap between the ring gear 40 and the outer plate 120 from the one-way clutch 30 to the outside of the internal combustion engine 1, and the dust seal section 74 prevents dust from entering the one-way clutch 30 from the outside of the internal combustion engine 1.

As described above, in the oil seal structure applied to the starting torque transmission mechanism, the inner sealing member 70 is arranged radially outward of the one-way clutch 30. Thus, the diameter of the surface along which the lip seal section 72 of the sealing member 70 slides, that is, the outer circumferential surface of the outer race 23 is increased, and the circumferential speed of the outer circumferential surface is increased. Therefore, since frictional heat generated in accordance with sliding of the lip seal section 72 is increased, thermal degradation of the lip seal section 72 tends to occur. Of course, if an appropriate amount of oil is stably supplied to the lip seal section 72, the lip seal section 72 is cooled, and such thermal degradation is expected to be inhibited by a certain degree. However, in the starting torque transmission mechanism as described above, the oil supplied from the oil groove 2a formed in the cylinder block 2 is supplied in order of the ball bearing 60, the one-way clutch 30, and the inner sealing member 70. Therefore, the oil might not reach the inner sealing member 70, or even if the oil reaches the inner sealing member 70, the oil immediately passes through the inner sealing member 70 and leaks to the outside of the inner scaling member 70. Thus, the lip seal section 72 is not cooled, and thermal degradation occurs. Therefore, the problem arises that deterioration of the sealing performance of the inner sealing member 70 can no longer be ignored.

The present embodiment appropriately inhibits thermal degradation of the inner sealing member 70 by providing an oil retaining part H1, which retains oil, in the vicinity of a region S of the outer circumferential surface of the outer plate 20, along which the lip seal section 72 slides, as shown in Fig. 4.

The structure of the oil retaining part H1 will now be described.

As shown in Fig. 4, recesses h1, which form the oil retaining part H1, are formed on the outer circumferential surface of the outer race 23 between the region S, along which the lip seal section 72 of the inner sealing member 70 slides, and a region T, along which the dust seal section 74 slides, The surfaces of the recesses h1 are substantially hemispherical. The multiple recesses h1 are arranged in the axial direction of the outer race 23 along the entire circumference of the outer race 23. In the present embodiment, the recesses h1 are formed by machining, but the recesses h1 may be formed by other processing method such as laser machining.

The ring gear 40 of the present embodiment corresponds to the first member of the present invention, and the outer plate 20 of the present embodiment corresponds to the second member of the present invention.

The oil seal structure according to the present embodiment as described above has the following advantages.
(1) The oil seal structure includes the ring gear 40, which has the inner circumferential surface, the outer plate 20 (more specifically, the outer race 23), which has the outer circumferential surface facing the inner circumferential surface of the ring gear 40 and is coaxial with and rotational relative to the ring gear 40, and the inner sealing member 70 fitted to the inner circumferential surface of the ring gear 40. The inner sealing member 70 includes the lip seal section 72, which is slidable with respect to the outer circumferential surface of the outer plate 20. and prevents leakage of oil through the gap between the inner circumferential surface of the ring gear 40 and the outer circumferential surface of the outer plate 20. Also, the oil retaining part H1 for retaining the oil is provided in the vicinity of the region S of the outer circumferential of the outer plate 20, which the lip seal section 72 slides. Therefore, when frictional heat is generated as the lip seal section 72 slides with respect to the outer circumferential surface of the outer plate 20, some of the heat is transferred to the oil retained in the oil retaining part H1 at an early stage. Accordingly, as compared to the structure in which such an oil retaining part H1 is not provided, temperature its reduced at the region S of the outer circumferential surface of the outer plate 20, along which the lip seal section, 72 slides, and the temperature increase of the lip seal section 72 is also reduced. Further, since the oil retaining part H1 is not provided on the region S itself on the outer circumferential surface of the outer prate 20, along which the lip seal section 72 slides, the oil sealing performance of the inner sealing member 70 is not reduced due to providing the oil retaining part H1 on the outer circumferential surface of the outer plate 20. Therefore, the thermal degradation of the inner sealing member 70 is appropriately inhibited.
(2) The oil retaining part H1 is provided on the entire circumference of the outer plate 20. Thus, temperature increase at the region S of the outer circumferential surface of the outer plate 20, along which the lip seal section 72 slides, is reduced along the entire circumference, and the temperature increase of the lip seal section 72 is also reduced. Therefore, the thermal degradation of the inner sealing member 70 is appropriately inhibited.
(3) The oil retaining part H1 is composed of the recesses h1 formed in the outer circumferential surface of the outer plate 20. Thus, the oil that enters inside the recesses h1 is retained inside the recesses h1. Therefore, the oil retaining part H1 is formed in an easy manner.
(4) The surfaces of the recesses h1 are substantially hemispherical. Thus, the recesses h1 are easily formed by machining.
(5) The inner sealing member 70 further includes the dust seal section 74, which is located outward of the lip seal section 72 in the axial direction and is slidable with respect to the outer circumferential surface of the outer plate 20. Also, the oil retaining part H1 is provided on the outer circumferential surface of the outer plate 20 between the region S, along which the lip seal section 72 slides, and the region T, along which the dust seal section 74 slides. That is, the oil retaining part H1 is not provided on the region S, along which the lip seal section 72 slides, and the region T, along which the dust seal section 74 slides, on the outer circumferential surface of the outer plate 20. Thus, the oil sealing performance and the dust sealing performance of the inner sealing member 70 are not reduced due to providing the oil retaining part H1 on the outer circumferential surface of the outer prate 20.

### [Second Embodiment]

A second embodiment of the present invention will now be described with reference to Fig. 5.

Fig. 5 shows a cross-sectional of an inner sealing member 70 and the surrounding structure in the oil seal structure according to the second embodiment. Fig. 5 corresponds to Fig. 4 of the first embodiment. Also, the structure other than an outer race 223 is the same as the first embodiment, and duplicate description will be omitted.

As shown in Fig. 5, a groove h2, which constitutes an oil retaining part H2, is formed in the outer circumferential surface of the outer race 223 between the region S, along which the lip seal section 72 of the inner sealing member 70 slides, and the region T, along which the dust seal section 74 slides. The groove h2 extends on the outer circumferential surface of the outer race 223 helically about the central axis of the outer race 223. The direction of the helical is set such that the groove h2 approaches the lip seal section 72 as the groove h2 is followed in the rotation direction of outer race 223. For convenience, the groove h2 is perpendicular to the central axis of the outer race 223 in Fig. 5. However, the groove h2 is actually inclined, and the upper section inclines toward the left side in Fig. 4. Also, in the second embodiment, the groove h2 is formed by machining, but the groove h2 may be formed by other processing method such as laser machining.

The oil seal structure according to the second embodiment has the following advantages in addition to the advantages (1) to (3), and (5) of the first embodiment.
(6) The oil retaining part H2 is the groove h2 formed in the outer circumferential surface of the outer plate 220 (more specifically, the outer race 223). The groove h2 extends helically about the central axis of the outer plate 220 such that the groove h2 approaches the lip seal section 72 as the groove h2 is followed in the rotation direction of the outer race 223. Thus, the oil, the temperature of which has been increased by receiving some of the heat generated by sliding of the lip seal section 72 with respect to the outer circumferential surface of the outer plate 220, moves through the groove h2 in the direction away from the lip seal section 72 (rightward in Fig. 5) in accordance with rotation of the outer plate 220. Accordingly, the oil with increased temperature is prevented from being retained at part of the groove h2 close to the lip seal section 72. That is, the temperature of the oil at the region of the groove h2 close to the lip seal section 72 is kept low. Thus, the frictional heat generated in accordance with sliding of the lip seal section 72 of the inner sealing member 70 with respect to the outer circumferential surface of the outer plate 220 is kept transferred to the oil in the oil retaining part H2 in a suitable manner. Accordingly, the temperature increase at the region S of the outer circumferential surface of the outer plate 220, along which the lip seal section 72 slides, is reduced, and the temperature increase of the lip seal section 72 is also reduced.

### [Third Embodiment]

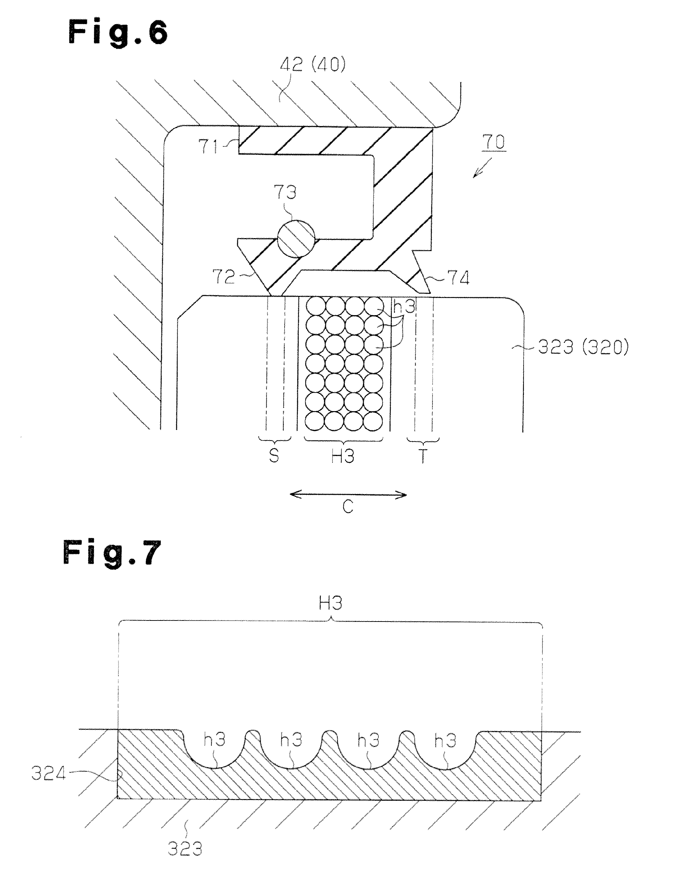

A third embodiment of the present invention will now be described with reference to Figs. 6 and 7.

Fig. 6 shows a cross sectional view of an inner sealing member 70 and the surrounding structure in the oil seal structure according to the third embodiment. Fig. 7 shows a cross-sectional of an oil retaining part H3. Fig. 6 corresponds to Fig. 4 of the first embodiment. Also, the structure other than an outer race 323 is the same as the first embodiment, and duplicated description will be omitted.

As shown in Figs. 6 and 7, the part of the outer circumferential surface of the outer race 323 between the region S, along which the lip seal section 72 of the inner sealing member 70 slides, and the region T, along which the dust seal section 74 slides, forms a reduced diameter portion 324 the diameter of which is reduced along the entire circumference. The cylindrical oil retaining part H3 is joined to the reduced diameter portion 324. While part of the outer plate 320 other than the oil retaining part H3 is formed of metal material including iron as a main ingredient, the oil retaining part H3 is formed of metal material including copper as a main ingredient. That is, the oil retaining part H3 is formed of material that has thermal conductivity higher than the region S of the outer plate 320, along which the lip seal section 72 slides (specifically, the outer race 323). Recesses h3 are formed on the outer circumferential surface of the oil retaining part H3. The surfaces of the recesses h3 are substantially hemispherical, and the multiple recesses h3 are arranged in the axial direction of the outer race 323 along the entire circumference of the outer race 323. Also, in the third embodiment, the recesses h3 are first formed in the outer circumferential surface of a plate that will become the oil retaining part H3. The oil retaining part H3 is then joined to the reduced diameter portion 324 of the outer race 323. Instead, the plate that will become the oil retaining part H3 may be joined to the reduced diameter portion 324 formed in the outer circumferential surface of the outer race 323, and then the recesses h3 may be formed in the outer circumferential surface of the plate. In the third embodiment, the recesses h1 are formed by pressing, but the recesses h1 may be formed by other processing method such as laser machining.

The oil seal structure according to the third embodiment has the following advantages in addition to the advantages (1) to (5) of the first embodiment.
(7) The oil retaining part H3 is formed of material that has thermal conductivity higher than the region S of the outer plate 320. along which the lip seal section 72 slides (specifically, the outer race 323). Thus, when frictional heat is generated in accordance with sliding of the lip seal section 72 with respect to the outer plate 320, some of the heat is transferred to the oil retaining part H3 at an early stage. Then, the heat transferred to the oil retaining part H3 is transferred to the oil retained in the oil retaining pan H3 at an early stage. Thus, the temperature increase at the region S of the outer circumferential surface of the outer plate 320. along which the lip seal section 72 slides, is reduced, and the temperature increase of the lip seal section 72 is also reduced. Therefore, the thermal degradation of the inner sealing member 70 is appropriately inhibited.

The oil seal structure of the present invention is not limited to the structures illustrated in the above embodiments, but may be modified as follows.

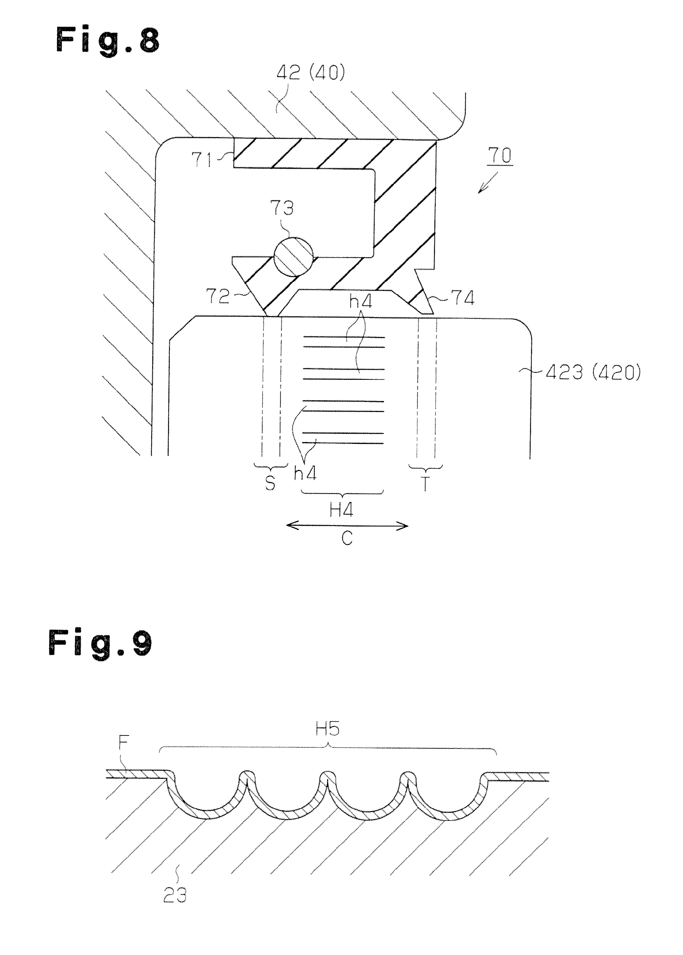

In the second embodiment, the groove h2, which extends helically about the central axis of the outer pilate 220 is illustrated as the recess forming the oil retaining part H2, but the shape of the groove is not limited to the helical shape. Alternatively, for example, grooves h4 extending along the axial direction on the outer circumferential surface of an outer plate 420 (more specifically, an outer race 423) may be employed as the recess forming an oil retaining part H4 as shown in Fig. 8. More specifically, the grooves h4 are arranged at equal angular intervals along the entire circumference of the outer circumferential surface of the outer race 423. In this case also, the oil the temperature of which has been increased by receiving some of the heat generated in accordance with sliding of the lip seal section 72 with respect to the outer circumferential surface of the outer plate 420 is discharged in the direction away from the lip seal section 72 through the grooves h4. Thus, the oil with increased temperature is inhibited from being retained at the region of the grooves h4 close to the lip seal section 72. That is, the temperature of the oil at the region of the grooves h4 close to the lip seal section 72 is kept low. Therefore, the frictional heat generated in accordance with sliding of the lip seal section 72 with respect to the outer circumferential surface of the outer plate 420 is kept transferred to the oil in the oil retaining part H4 in an appropriate manner. Thus, the temperature increase of the region S of the outer circumferential surface of the outer plate 420, along which the lip seal section 72 slides, is reduced, and the temperature increase of the lip seal section 72 is also reduced.

The third embodiment illustrates the oil seal structure in which the cylindrical oil retaining part H3 having recesses h3 on the outer circumferential surface is provided in the reduced diameter portion 324 formed in the outer circumferential surface of the outer race 323. However, for example, an oil retaining part H5 may be formed in the outer circumferential surface of the outer race 23 described in the first embodiment by providing a metal film F including copper as a main ingredient as shown in Fig. 9.

In the third embodiment and its modification, the oil retaining part is formed of metal including copper as a main ingredient. However, the material forming the oil retaining part is not limited to this. The material may be changed as long as the material has thermal conductivity higher than the region S of the outer plate, along which the lip seal section 72 slides,

In the first embodiment and the second embodiment, the surface shape of the recesses h1, h3 is substantially hemispherical. Instead, the surface shape may be another recessed shape such as a column shape or a spindle shape. Also, the structure of the oil retaining part is not limited to the recess formed in the outer circumferential surface of the outer race. Oil may be retained by projections that project radially outward from the outer circumferential surface of the outer race.

In the above described embodiments, providing the oil retaining part along the entire circumference, of the outer circumferential surface of the outer race is preferable in reducing the temperature increase along the entire circumference at the region S of the outer circumferential surface of the outer plate, along which the lip seal section 72 slides, and reducing the temperature increase of the lip seal section 72. However, the oil retaining part according to the present invention is not limited to this. The oil retaining part may be partially provided in the circumferential direction of the outer plate. In this case also, the thermal degradation of the inner sealing member 70 is appropriately reduced to a certain degree.

Each of the above embodiments illustrates the oil seal structure in which the oil retaining part for retaining the oil is provided in the vicinity of part of the outer circumferential surface of the seconding member, along which the lip seal section slides, However, the present invention is not limited to this. A high thermal conductivity section may be provided in the vicinity of the region of the outer circumferential surface of the second member, along which the lip seal section slides. The high thermal conductivity section is formed of material that has thermal conductivity higher than the above-mentioned region. More specifically, in the third embodiment, the recesses h3 may be omitted from the annular plate joined to the reduced diameter portion 324 of the outer race 323. That is, the annular plate corresponds to the high thermal conductivity section of the present invention. With this structure, when the frictional heat is generated in accordance with sliding of the lip seal section 72 with respect to the outer circumferential surface of the outer race 323, part of the heat is transferred to the plate, which is the high thermal conductivity section, at an early stage. Thus, as compared to the structure that is not provided with such a high thermal conductivity section, the temperature increase of the region S of the outer circumferential surface of the outer race 323, along which the lip seal section 72 slides, is reduced, and the temperature increase of the lip seal section 72 is also reduced. Further, since the plate is not provided at the region S of the outer circumferential surface of the outer race 323, along which the lip seal section 72 slides, the sealing performance of the inner sealing member 70 is not reduced due to providing the plate on the outer circumferential surface of outer race 323. Therefore, the thermal degradation of the inner sealing member 70 is appropriately inhibited.

In each of the embodiments, the oil retaining part or the high thermal conductivity section is provided on the outer circumferential surface of the outer race in regard to the problem that the thermal degradation of the lip seal section 72 occurs due to the frictional heat generated by sliding of the lip seal section 72 with respect to the outer circumferential surface of the outer race. However, the present invention is not limited to this. In a case in which the frictional heat generated in accordance with sliding of the outer circumferential surface of the angled portion 42 of the ring gear 40 with respect to the lip seal section of the outer sealing member 90 causes problems, the present invention may be applied to the outer circumferential surface of the angled portion 42 (see Fig. 1).

In each of the above embodiments, the oil seal structure is illustrated that includes the ring gear 40 that has the inner circumferential surface, the outer plate 20 that has the outer circumferential surface facing the inner circumferential surface of the ring gear 40 and is coaxial with and rotational relative to the ring gear 40 (more specifically, the outer race 23), and the inner sealing member 70. The inner sealing member 70 includes the lip seal section 72, which is fitted to the inner circumferential surface of the ring gear 40 and is slidable with respect to the outer circumferential surface of the outer plate 20. The inner sealing member 70 prevents leakage of the oil through the gap between the inner circumferential surface of the ring gear 40 and the outer circumferential surface of the outer plate 20. However, the present invention is not limited to this. For example, the oil seal structure of the present invention may be applied to the starting torque transmission mechanism in which the one-way clutch, the ball bearing, and the inner sealing member are arranged coaxially between the inner circumferential surface of the outer race coupled to the ring gear and the outer circumferential surface of the inner race coupled to the crankshaft. In this case, since the surface along which the lip seal section of the inner sealing member slides corresponds to the outer circumferential surface of the inner race, the oil retaining part or the high thermal conductivity section may be provided on the outer circumferential surface of the inner race. In this case, the outer race corresponds to the first member of the present invention, and the inner race corresponds to the second member of the present invention.

Each of the above embodiments illustrates the oil seal structure applied to the starting torque transmission mechanism for the internal combustion engine. However, the oil seal structure of the present invention is not limited to this. In essence, the application object may be changed as required as long as the oil seal structure includes the first member that has the inner circumferential surface, the second member that has the outer circumferential surface facing the inner circumferential surface of the first member and is coaxial with and rotational relative to the first member, and the sealing member, which includes the lip seal section fitted to the inner circumferential surface of the first member and is slidable with respect to the outer circumferential of the member. Further, the sealing member prevents leakage of oil through the gap between the inner circumferential surface of the first member and the outer circumferential surface of the second member to the outside.

## Claims

1. An oil seal structure comprising:
a first member including an inner circumferential surface;
a second member including an outer circumferential surface, which faces the inner circumferential surface of the first member, the second member being coaxial with and rotational relative to the first member;
a sealing member fitted to the inner circumferential surface of the first member, the sealing member including a lip seal section, which can slide against the outer circumferential surface of the second member, and the sealing member preventing oil from leaking out through between the inner circumferential surface of the first member and the outer circumferential surface of the second member; and
an oil retaining part for retaining oil, the oil retaining part being provided in the vicinity of a region of the outer circumferential surface of the second member along which the lip seal section slides.

2. The oil seal structure according to claim 1, wherein the oil retaining part is provided along the entire circumference of the second member.

3. The oil seal structure according to claim 1 or 2, wherein the oil retaining part is a recess formed in the outer circumferential surface of the second member.

4. The oil seal structure according to claim 3, wherein the surface of the recess is substantially hemispherical.

5. The oil seal structure according to claim 3, wherein the recess extends in a predetermined direction on the outer circumferential surface of the second member.

6. The oil seal structure according to claim 5, wherein the recess extends helically about a central axis of the second member to approach the lip seal section as the recess is followed in the rotation direction of the second member.

7. The oil seal structure according to claim 5, wherein the recess extends along an axial direction of the second member.

8. The oil structure, according to any one of claims 1 to 7, wherein the oil retaining part is formed of material having thermal conductivity higher than the region of the second member along which the lip seal section slides.

9. The oil seal structure according to any one of claims 1 to 8, wherein
the sealing member further includes a dust seal section, which is located outward of the lip seal section in the axial direction of the sealing member and can slide against the outer circumferential of the second member, and
the oil retaining part is provided on the outer circumferential surface of the second member between the region along which the lip seal section slides and the region along which the dust seal section slides.

10. An oil seal structure comprising:
a first member including an inner circumferential surface;
a second member including an outer circumferential surface, which faces the inner circumferential surface of the first member, the second member being coaxial with and rotational relative to the first member,
a sealing member flitted to the inner circumferential surface of the first member, the sealing member including a lip seal section, which can slide against the outer circumferential surface of the second member, and the sealing member preventing oil from leaking out through between the inner circumferential surface of the first member and the outer circumferential surface of the second member; and
a high thermal conductivity section provided in the vicinity of a region of the outer circumferential surface of the second member along which the lip seal section slides, the high thermal conductivity section being formed of material having thermal conductivity higher than the region.

11. The oil seal structure according to any one of claims 1 to 10, wherein
the oil seal structure is applied to a starting torque transmission mechanism for an internal combustion engine,
the first member is adapted such that rotational force from a starting motor for the internal combustion engine is constantly transmitted to the first member.
the second member is adapted such that rotational force from a rotary output shaft of the internal combustion engine is constantly transmitted to the second member,
the starting torque transmission mechanism includes a one-way clutch provided between the first member and the second member, the one-way clutch permits rotational force of the starting motor in one direction to be transmitted from the first member to the second member, and prevents rotational force from being transmitted from the second member to the first member, and
the sealing member prevents oil from leaking out from the one-way clutch between the inner circumferential surface of the first member and the outer circumferential surface of the second member.

12. The oil structure according to claim 11, wherein
the first member is a substantially disk-like ring gear to which rotational force from the starting motor is constantly transmitted, the ring gear including an angled portion, which is angled like a step and arranged along the entire circumference at a radially middle part of the ring gear, and an inner race, which is provided radially inward of the angled portion and faces the inner circumferential surface of the angled portion,
the second member is a substantially disk-like outer plate coupled to the rotary output shaft of the combustion engine, the outer plate including an outer race, which projects ion the axial direction along the entire circumference of the outer circumferential section of the outer plate,
the ring gear and the outer plate are arranged such that the outer race is located between the angled portion the inner race,
the one-way clutch is provided the outer circumferential surface of the inner race and the inner circumferential of the outer race, and
the sealing member is provided between the inner circumferential surface of the angled portion and the outer circumferential surface of the outer race.
